# EUROPEAN PATENT APPLICATION

(11) **EP 2 192 811 A1**
(43) Date of publication of application: **02.06.2010**
(21) Application number: 08305855.2
(22) Date of filing: 27.11.2008
(51) Int. Cl.: H04W 64/00, H04W 48/10

(54) **Method of determining a position of a wireless mobile terminal**

(71) Applicant: Alcatel Lucent, 75008 Paris (FR)
(72) Inventor: Nataranni, Lionel, 91620, Nozay (FR); Hebbar, Abdelkrim, 91620, Nozay (FR)
(74) Representative: Hedarchet, Stéphane

(57) **Abstract**

A method of determining a position of a wireless mobile terminal connected to a wireless local area network comprising a plurality of access points having a fixed position and a predetermined range of service, the method comprising the following steps :
- setting the position coordinates of the access points,
- periodically broadcasting by each access point its respective position in a standard format within a service set identification field of a specific channel,
- each time a terminal enters a range of service of a dedicated access point, analyzing by the terminal the service set identification field broadcast by the associated access point,
- extracting the position coordinates of the associated access point by parsing the service set identification field,
- storing said position coordinates as the terminal's position.

## Description

The present invention is related to a method of determining a position of a wireless mobile terminal

Nowadays, WIFI and WLAN technologies and related signals are available nearly everywhere: from public to private places, in enterprises, in home, in schools, in subways, in airports, in shopping centers, in towns, in parks, in train stations, in ski resorts and so on. They can be considered as one of the most widely deployed telecommunication protocol on earth, and one of the most accessible, visible and universal technology.

At the same time, portable devices like mobile phones and laptops use mainly GPS signals to determine their location. GPS is very popular because it is based on a free signal, and provides a quite accurate precision. Besides it is a universal service, working everywhere on earth, working in broadcast mode so that portable devices just have to receive this GPS specific signal to get their position. An other localization technique is provided by mobile phone operators that can localize a cell phone on their own network but it is often not free and limited to the network visibility and compatibility. Moreover, a cell phone in idle mode may not be located at a better location accuracy than the Location Area scope as there is no location data retrieval within a same location area, leading to a bad localization accuracy for cell phones in idle mode.

The technical problem addressed in the present application is how to provide localization information to a mobile device from a deployed or a new wireless network based on WIFI or Bluetooth technologies and without using the specific GPS system nor complex triangulation algorithms and client-server architecture.

As a matter of fact, geo-localization techniques destined to localize mobiles (i.e mobile phones, GSM or UMTS-enabled PDAs, or the like) are known and many different approaches are today implemented and available to achieve the goal to provide geographical coordinates to the mobile devices. Here-below are the available localization methods :
- As previously mentioned, the GPS (acronym from Global Positioning System), requires a constellation of satellites and a specific GPS chip inside the mobile device to acquire the signal. This solution benefits from a free signal, its autonomy (no needed connectivity to a server) and its flexibility.

### But its drawbacks are the followings:

The need to have a GPS chip increases the cost of the mobile device and reduce the battery autonomy.

The availability of GPS information is not immediate, there is a variable latency time (from 10 sec. to 5 min. which corresponds to the Time to First Fix) when the GPS chip is being switched on, therefore GPS is not such a convenient service as an "on demand" positioning system when the GPS chip status is being switched from off to on.

Lastly, the GPS is only an outdoor-oriented solution and can be disturbed by weather conditions, buildings and concentrated infrastructures.
- the so-called EOTD method (Enhanced Observed Time Difference) and the Assisted-GPS method, that are well-known methods for the Man skilled in the Art, are all operator-oriented solutions, they need a connection to a remote server, a specific mobile phone subscription and are not flexible.
- Cell-id, Wifi and antennas triangulation methods based on specific triangulation algorithms are not so reliable because depending on antenna or access point databases and infrastructure knowledge. It is indeed the case with "Google Locate Me" service. These technologies are also client-server oriented and need connection to a server to reach the required service.
- RFID and other RTLS (acronym from "Real Time Localization Systems") require expensive infrastructures, complex deployment, server connection and are not flexible.

As listed above, many existing solutions to provide geo-localization service are based on complex, expensive and not flexible architectures.

All these existing solutions involve servers, as well as dedicated localization Access Points or complex embedded software clients on the mobile terminal.

In particular, the document US2004/0162084 (hereinafter [B] for the sake of simplicity) describes a positioning method with wireless local area network and WLAN aided global positioning system. This solution has the capabilities to localize a wireless mobile terminal (or STA in the WIFI protocol description) equipped with a GPS mechanism at the position (x0, y0, z0) based on one or several access points dedicated to localisation (APL) without using any additional localization servers (SRV). Each APL stores its own GPS position (xn, yn, zn). Below is briefly given the overall mechanism :
- when a STA wants to compute its position, it connects to a dedicated APL which returns its stored GPS position (xi, yi, zi). The STA registers the power level of the received signal (ri).
- running a specific software with the 2 collected parameters (xi, yi, zi) and ri, the STA computes its own GPS position (x0,y0,z0) that allows to assist its embedded GPS receptor in computing the precise coordinates of the host STA.

This latter solution in [B] raises several constraints :
- first constraint : the STA can compute its localization only when it connects and is associated to an APL (cf [0011] « Specifically, when associated with WLAN, a client can quickly determine its position ...» , and «... WLAN can provide time, location, and decoded GPS data to the client before its disassociation ...» ). Therefore [B] does not propose a true real-time localization method. As a matter of fact, in a mixed WLAN environment containing at the same time normal APs and APLs, if the STA is connected to a normal AP (i.e no possibilities to use the localization mechanism proposed by [B]), it needs to :
   1. disconnect from AP
   2. connect again to an APL
   3. get its localization
   4. disconnect from the APL
   5. connect again to AP...
- second constraint: the STA must have a mean to identify the APLs among all classical APs it can access (for example a specific table to store the identification of all APLs)
- third constraint: The STA must implement a not trivial calculation mechanism to compute a position (x0, y0, z0) from a local table storing the relative values of the RSSI signal ri according to the distance from the APL it is connected to.
- fourth constraint: the STA must know the security key to be able to connect on APL. So due to security constraints of AP, the connected mode needs to have authorized access to APL.

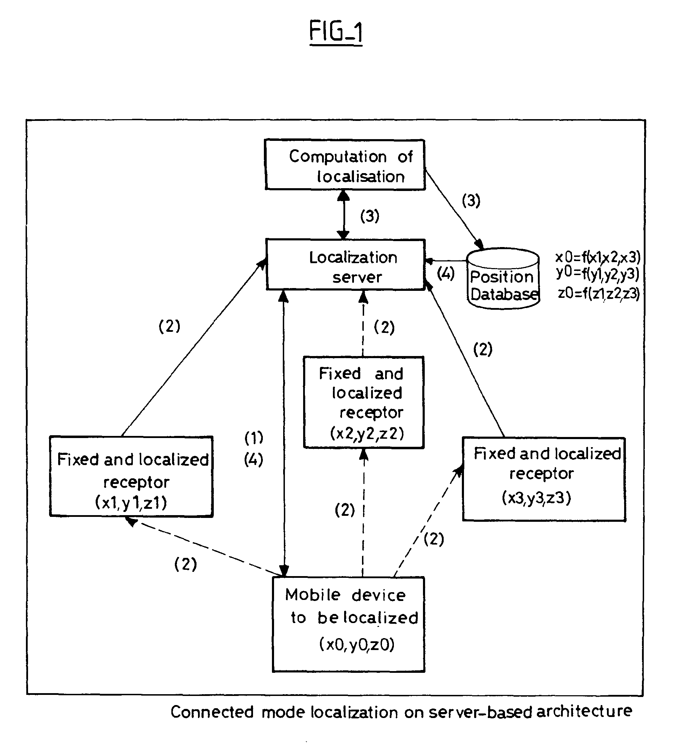

As described on the figure 1 below, for any of existing localization technologies working in a connected mode for computing localization data, the localization phases are:
(1) The mobile device initiates a connection to the localization server
(2) The system gets coordinates of related localization receptors
(3) The server computes and stores the mobile device localization
(4) The mobile device receives its localization (x0, y0, z0) by the server.
The above-mentioned references in parenthesis are reflected in the figure 1.

The present invention aims at implementing the ability of the deployment of a geo-localization network with a very low investment cost and in a short time limit with very few hardware or software modifications.

The object of the present invention, according to an embodiment, is a method of determining a position of a wireless mobile terminal connected to a wireless local area network comprising a plurality of access points having a fixed position and a predetermined range of service, the method comprising the following steps :
- setting the position coordinates of the access points,
- periodically broadcasting by each access point its respective position in a standard format within a service set identification field of a specific channel,
- each time a terminal enters a range of service of a dedicated access point, analyzing by the terminal the service set identification field broadcast by the associated access point- extracting the position coordinates of the associated access point by parsing the service set identification field,
- storing said position coordinates as the terminal's position.

According to an embodiment of the invention, the wireless local area network uses IEEE 802.11 (in particular a, b, g or n extension ) specifications and each access point periodically broadcasts a beacon frame to propagate its presence and relay information which carries the SSID including said position coordinates, the channel number and security protocols such as WEP (Wired Equivalent Protection) or WPA (Wi-Fi Protected Access).

According to an embodiment of the invention, the terminal periodically scans all IEEE 802.11 radio channels and analyses beacons for access point selection.

According to an embodiment of the invention, the terminal supports passive scanning, scanning on a given channel for beacons and probe responses without issuing its own probe requests.

According to an embodiment of the invention, the terminal supports active scanning issuing probe requests.

The terminal doesn't need any connection so that it can get localization from any APL without any security constraint (doesn't need any authorization nor password) because the mechanism of beacons listening is free of access.

According to an embodiment of the invention, the method comprises creating respectively a virtual access point associated to each access point leading to partition, for each of the access point, a single physical access point into several logical access points, one of which structuring position coordinates information.

According to an embodiment of the invention, the longitude/latitude geographical coordinates are coded using WGS84 system (World Geodetic System 1984), in particular using the DD-WGS84 meaning that the decimal degrees are in WGS84 format.

Other objects and further features of the present invention will be apparent from the following detailed description when read in conjunction with the accompanying drawing:
Fig. 1 illustrates a localization method as in the prior art,
Fig. 2 schematically illustrates an embodiment of a localization method according to the invention
Fig.3 schematically illustrates a mechanism of localization according to an embodiment of the invention.

A description will hereinafter be given of embodiments of the present invention, by referring to the drawings.

The aim of the present invention is to benefit from the information broadcasted in the management frames in the WIFI networks.

The invention allows to implement the ability to deploy a geo-localization network with a very low investment and, in a very short time limit, with no hardware or software modifications.

By setting localization information of the access point (longitude / latitude / altitude) as friendly-name, it is provided, for any mobile terminals having WIFI receiver entering in the coverage area of the access point, the possibility to get its localization by just "listening" beacons frames. These localization access points (hereinafter "LAP") networks can be composed from 1 to thousands of APs depending on the needed accuracy level and usage of geo-localization information.

A geo-localized application running on the terminal can then gets the coordinates of the AP allowing an acceptable accuracy of the terminal localization.

The invention, AP-side, can be installed on an existing AP as well as a new installed AP. In the present application and the following below-described embodiment, the term "localization access point" stands for WIFI access point and the term SSID stands for WIFI SSID. SSID (acronym for "service set identifier") is a name used to identify the particular IEEE 802.11 standard wireless LANs to which a user wants to attach. A client terminal will receive broadcast messages from all access points within range advertising their SSIDs, and can choose one to connect to based on pre-configuration, or by displaying a list of SSIDs in range and asking the user to select one.

Of course the term "localization access point" stands more generally for any WLAN access point (WLAN being understood as any wireless communication such as IEEE 802.11, Bluetooth, HiperLAN, etc.) and the term SSID stands for any WLAN SSID.

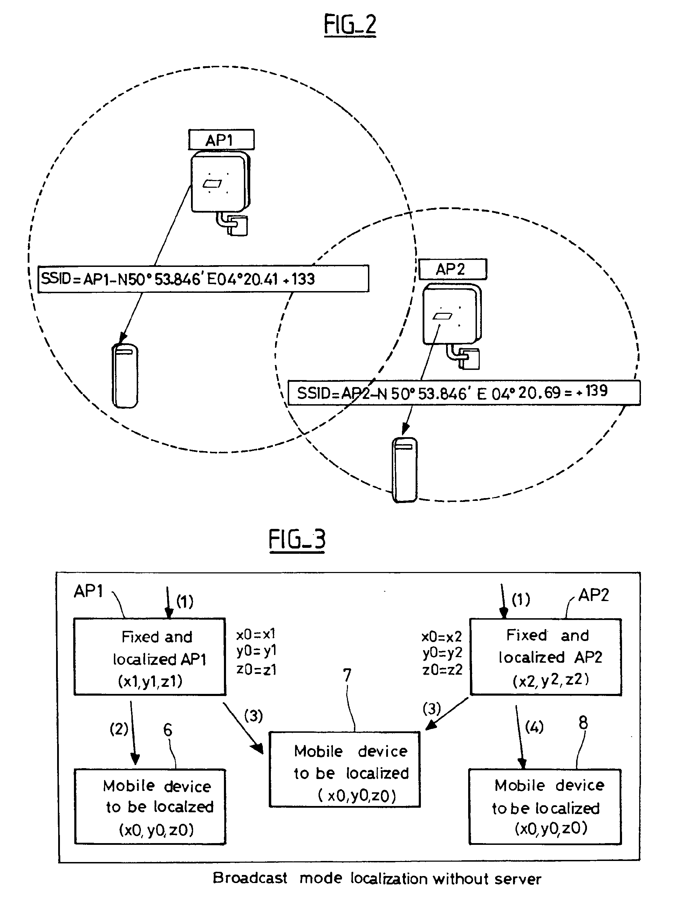

An embodiment of the invention is described below in reference with Figure 2.

Roughly speaking, it is based on 2 steps.
1. Wireless Local Network Deployment and coordinates setting :
   Each time an AP is installed, the SSID name which is a friendly-name field (32 characters for WIFI, each of which may take any value) is configured to contain the GPS coordinates of the AP in the standard format (longitude / latitude / altitude), for example:
   "N 50° 53.846 E 04° 20.361 +133",
   so that the SSID of an AP could be "XXX-N 50° 53.846 E 04° 20.361 +133"
2. AP's coordinates acquisition :
   Each time a mobile terminal enters in the area covered by the AP, this AP communicates its SSID value ("XXX-N 50° 53.846 E 04° 20.361 +133"). The terminal receives the SSID value just by listening information frames sent by the AP.

Then a geo-localized application is able to extract the GPS coordinates ("N 50° 53.846' E 04° 20.361"') by simply parsing the SSID.

### Implementation:

The implementation is based on the use of WIFI technology where it is proposed to modify the beacon frame which is a management frame available in the IEEE 802.11 specifications protocol.

In the field of WIFI (wireless local area networks using the IEEE 802.11b and 802.11g specifications), the term beacon signifies a specific data transmission from the wireless access point (AP), which carries the SSID, the channel number and security protocols such as WEP (Wired Equivalent Protection) or WPA (Wi-Fi Protected Access). This transmission does not contain the link layer address of another Wi-Fi AP, therefore it can be received by any WIFI client.

The access point periodically sends a beacon frame to announce its presence and relay information, such as timestamp, SSID, and other parameters regarding the access point to the terminals (STAs) that are within range. The terminals (STAs) regularly scan all IEEE 802.11 specs radio channels and listen to beacons as a basis for their choice as to which access point is best to connect with.

In order to retrieve SSIDs, the terminal (STA) may support passive and/or active scanning. In passive scanning, the terminal (STA) scans on a given channel for Beacons and Probe Responses, but does not issue its own Probe Requests. In active scanning, the terminal (STA) issues a Probe Request to obtain this information more quickly.

One of the proposed solution in an embodiment for the implementation of the invention is to encode the localization in the SSID field of the beacon frame.

In IEEE 802.11 specifications, the SSID is a field between 0 and 32 octets that may be included as an Information Element (IE) within management frames. A zero length SSID indicates the broadcast SSID "any". Management frames supporting the SSID IE include the Beacon, Probe Request/Response, and Association/Reassociation Request frames.

In order to avoid reducing the usage of the existing SSID, we can use a specific usage of the IEEE 802.11 specification protocol which is the "virtual SSID".

In general, multiple (or virtual) SSIDs allow to create multiple network names or SSIDs on one AP with the ability to customize their individual security and broadcast settings. Additionally, the virtual SSIDs may be assigned to different WLANs to provide segregation between the virtual wireless networks.

By creating a virtual AP, it is then possible to create an image of the real AP which will be only responsible of localization.

Another embodiment to implement the invention is to propose to create a specific field in beacon management frame dedicated to encode the localization information.

### Localization information encodinq:

- The longitude latitude geographical coordinates are coded using WGS84 (World Geodetic System 1984) system. More specifically, the DD-WGS84 is used, meaning that the decimal degrees are in WGS84 format.
   For example: +49.1232 +123.6676
- For the elevation: a representation of altitude or depth in meters is used
   Example: +354 (for an altitude of 354 meters)

Below is given the localization representation in a SSID field (potentially standardized)

| SSID header (12 bytes) | Latitude (4 bytes) | Latitude decimal (4 bytes) | Longitude (4 bytes) | Longitude decimal (4 bytes) | Elevation (4 bytes) |
|---|---|---|---|---|---|
| | +049 | 1232 | +123 | 6789 | +354 |

Figure 2 provides an illustration on how a mobile terminal 5 can get its approximative position from the coordinates of the AP stored in the SSID field.

When the mobile terminal 5 enters the area covered by the AP, it gets the SSID of this AP. It can then simply parse the received string to extract the coordinates so that geolocalized applications running on the terminal are able to locate the terminal across this wireless network. Of course, the terminal's position is known to be within the radio propagation range of the access point.

So, the invention works in a broadcast mode : it doesn't need any 1 to 1 connection with AP nor complex localization computation. The terminal has just to listen WIFI beacons to get its localization.

Some more precisions on the proposed mechanism according to an embodiment of the invention are given here-below where the localization phases between parenthesis are as depicted in Figure 3:
(1) When the AP is installed, its geographical position is entered by the technician. The technician uses a GPS device to get the exact position of the AP.
(2) The mobile terminal 6 is in passive mode and listens the nearest WIFI beacon frames so that its localization is available.
(3) The mobile terminal 7 receives beacons from AP2 but stay localized on AP1 because the signal received is higher (strongest signal path to the terminal).
(4) The mobile terminal 8 receives beacons from AP2 so its localization is given from AP2.

### Here-below are listed the benefits of the invention:

The invention notably solves the two main problems that could have potentially a great importance for a final mobile user:
- How and where to store GPS coordinates ?
- How to allow a mobile terminal to get the GPS coordinates ?

Until now, the simple way to address these problems is using a GPS equipment connected to a constellation of satellites.

The present invention provides a cheap solution to solve both problems listed above while offering a good precision to location-based applications.

It can be immediately implemented without extra-development of hardware nor specific software.

Some more advantages may be illustrated in view of the differences with the here-above cited prior art [B] :
Although [B] suggests resolving finely the problem of relative localization of a terminal STA with regard to an APL, the present invention is voluntarily simplifying by associating the position of the STA with the position of the AP from which it is received the SSID.

The present invention keeps all the innovative aspects of [B] while easily avoiding the three constraints described in a previous paragraph :
1. The present invention using the SSID to emit the GPS coordinates is based on the type of broadcasting of the classic APs which emit SSID frames in "broadcast" mode : an AP sends a frame of localization (xi, yi, zi) every 100ms. Each terminal STA entering the AP coverage zone is capable to recognize a GPS localization data (xi, yi, zi) by simply "reading" the SSID (even if it is connected to another AP) in a quasi real time.
2. The present invention is running with any type of AP : filling all or part of the SSID field of the AP with the GPS coordinates is enough.
3. In the present invention, as the GPS coordinates are immediately available in the SSID of the broadcasted frames, no complex software, no identification table or other data are needed to determine the location of the terminal STA.

To summarize the advantages quoted in the previous paragraph, this invention is based only on existing equipment and communication protocol. No extra work is needed, except for giving the appropriate name for the SSID allowing to contain the GPS coordinates at the AP installation time. There is no need for a remote server to map the AP name with its coordinates. There is no need for a specific equipment, nor need of complex and unreliable triangulation algorithms.

## Claims

1. A method of determining a position of a wireless mobile terminal connected to a wireless local area network comprising a plurality of access points having a fixed position and a predetermined range of service, the method comprising the following steps :
- setting the position coordinates of the access points,
- periodically broadcasting by each access point its respective position in a standard format within a service set identification field of a specific channel,
- each time a terminal enters a range of service of a dedicated access point, analyzing by the terminal the service set identification field broadcast by the associated access point,
- extracting the position coordinates of the associated access point by parsing the service set identification field,
- storing said position coordinates as the terminal's position.

2. A method according to claim 1, **characterized in that** the wireless local area network uses IEEE 802.11 band 802.11g specifications and each access point periodically broadcasts a beacon frame to propagate its presence and relay information which carries the SSID including said position coordinates, the channel number and security protocols such as WEP (Wired Equivalent Protection) or WPA (Wi-Fi Protected Access).

3. A method according to claim 2, **characterized in that** the terminal periodically scans all IEEE 802.11 radio channels and analyses beacons for access point selection.

4. A method according to claim 3, **characterized in that** the terminal supports passive scanning, scanning on a given channel for beacons and probe responses without issuing its own probe requests.

5. A method according to claim 3, **characterized in that** the terminal supports active scanning issuing probe requests.

6. A method according to claim 1, **characterized in that** it comprises creating respectively a virtual access point associated to each access point leading to partition, for each of the access point, a single physical access point into several logical access points, one of which structuring position coordinates information.

7. A method according to any of claims 1 to 6, **characterized in that** the longitude/latitude geographical coordinates are coded using WGS84 system (World Geodetic System 1984), in particular using the DD-WGS84 meaning that the decimal degrees are in WGS84 format.
